Europäisches Patentamt

European Patent Office

Office européen des brevets

(19)

(11) **EP 0 608 494 B1**

(12) **EUROPÄISCHE PATENTSCHRIFT**

(45) Veröffentlichungstag und Bekanntmachung des Hinweises auf die Patenterteilung:
  **15.09.1999 Patentblatt 1999/37**

(51) Int Cl.$^6$: **G01F 1/05**, G01P 3/48,
  G01P 13/02, G01P 3/488

(21) Anmeldenummer: **93117551.7**

(22) Anmeldetag: **29.10.1993**

(54) **Umdrehungsdetektor, insbesondere für ein Volumenmessteil**

Rotation detector, particularly for a volume measuring device

Détecteur de rotation, particulièrement pour un dispositif de mesure du volume

(84) Benannte Vertragsstaaten:
  **AT BE CH DE DK ES FR IT LI NL**

(30) Priorität: **26.01.1993 DE 4301966**

(43) Veröffentlichungstag der Anmeldung:
  **03.08.1994 Patentblatt 1994/31**

(73) Patentinhaber: **Techem Akfiengesellschaft & Co.
  60528 Frankfurt (DE)**

(72) Erfinder: **Binkle, Markus, Dipl.-Ing.
  D-55283 Nierstein (DE)**

(74) Vertreter: **Schubert, Siegmar, Dipl.-Ing. et al
  Patentanwälte
  Dr. Weinhold, Dannenberg,
  Dr. Gudel, Schubert
  Grosse Eschenheimer Strasse 39
  60313 Frankfurt (DE)**

(56) Entgegenhaltungen:
  EP-A- 0 080 056        DE-A- 2 911 420
  DE-A- 3 213 854        DE-C- 3 923 398

**Beschreibung**

Die Erfindung betrifft einen Umdrehungsdetektor, insbesondere für ein Volumenmeßteil, mit einem Rotor, der winkelig verteilt mehrere Bereiche mit unterschiedlichen Dämpfungseigenschaften für elektromagnetische Schwingungen aufweist, denen gegenüberliegend mehrere Sensoren angeordnet sind, die jeweils Elemente eines elektrischen Schwingkreises sind, derart, daß bei einer Drehung des Rotors die Schwingungen der Schwingkreise gedämpft werden, wobei die Ausgangssignale der Schwingkreise einer Diskriminatorschaltung zugeleitet werden, die die Umdrehungen des Rotors sowie ggf. auch dessen Drehrichtung mißt.

Derartige Detektoren werden vorteilhaft für Volumenmeßteile eingesetzt, beispielsweise für Warm- und Kaltwasserzähler oder auch für Wärmemengenzähler, wobei sie dann durch Temperaturfühler ergänzt sind.

Durch die DE 39 23 398 C1 ist ein Umdrehungsdetektor mit den eingangs genannten Merkmalen bekannt geworden. Dessen scheibenförmiger Rotor hat insgesamt zwei Bereiche mit unterschiedlichen Dämpfungseigenschaften, die sich jeweils über 180° erstrecken. Dem Rotor gegenüber liegen insgesamt vier Detektoren, und zwar um jeweils 90° voneinander beabstandet. Zwei der einander gegenüberliegenden Detektoren sind so zusammengeschaltet, daß sie ein Referenzsignal abgeben.

An diesem bekannten Detektor ist insbesondere der hohe konstruktive Aufwand nachteilig, der vor allem dadurch bedingt wird, daß man vier Detektoren benötigt. Man könnte zwar einen der Meßdetektoren ohne wesentliche Einbuße an Meßgenauigkeit fortlassen, aber auch dann benötigt man immer als Schwingspulen ausgebildete Detektoren, die nach dem heutigen Stand der Technik Sonderanfertigungen sein müssen, um die notwendige Empfindlichkeit zu haben, so daß jeder Detektor verhältnismäßig teuer ist.

Ausgehend von diesem Stand der Techik liegt daher der Erfindung die Aufgabe zugrunde, einen Umdrehungsdetektor mit den eingangs genannten Merkmalen vorzuschlagen, der ohne Einbuße an seine Qualität fühlbar kostengünstiger hergestellt werden kann.

Zur Lösung dieser Aufgabe ist die Erfindung dadurch gekennzeichnet, daß genau zwei Sensoren vorgesehen sind, von denen ein Sensor, der Referenzsensor, einem Bereich des Rotors gegenüberliegt, dessen Dämpfungseigenschaften sich bei der Drehung des Rotors nicht ändern, und daß der Rotor in demjenigen Bereich, der dem anderen Sensor, dem Meßsensor bei der Drehung gegenüberliegt, eine ungerade Anzahl der Bereiche mit unterschiedlichen Dämpfungseigenschaften hat.

Weil dem Referenzsensor ein Bereich des Rotors gegenüberliegt, dessen Dämpfungseigenschaften sich bei der Drehung des Rotors nicht ändern, kommt man mit einem einzigen Referenzsensor aus.

Die Tatsache, daß dem Meßsensor eine ungerade Anzahl von Bereichen des Rotors mit unterschiedlichen Dämpfungseigenschaften gegenüberliegt, bewirkt, daß das Ausgangssignal des Schwingkreises des Meßsensors einen unsymmetrischen Verlauf hat und daraus kann man mit Hilfe der Diskriminatorschaltung die Anzahl der Umdrehungen des Rotors sowie auch dessen Drehrichtung ableiten und messen.

Während man beim Stand der Technik insgesamt zwei Bereiche des Rotors mit unterschiedlichen Dämpfungseigenschaften hat, benötigt man bei der vorliegenden Erfindung wenigstens drei dieser Bereiche, evtl. auch fünf usf. Bereiche, wie weiter unten noch näher erläutert wird. Diese Erhöhung der Bereiche des Rotors mit unterschiedlichen Dämpfungseigenschaften schlägt aber preislich praktisch nicht zu Buche, weil dies durch sehr einfache Maßnahmen erreicht werden kann, die weiter unten noch näher erläutert werden.

Bei einer bevorzugten Ausführungsform ist der Rotor als Scheibe ausgebildet. Dies hat insbesondere den Vorteil, daß der Rotor wenig Platz benötigt.

Weiterhin wird es bevorzugt, wenn der Meßsensor möglichst nahe dem Rotor angeordnet ist. Dadurch wird die Meßempfindlichkeit des Rotors erhöht.

Der Referenzsensor kann der Drehachse des Rotors gegenüberliegend angeordnet sein. Bei dieser Ausführungsform kommt man mit einer ungeraden Anzahl von Bereichen des Rotors aus, die unterschiedliche Dämpfungseigenschaften haben; wenigstens muß man drei dieser Bereiche haben. Der Referenzsensor wird bei dieser Anordnung in gleicher Weise von allen Bereichen mit unterschiedlichen Dämpfungseigenschaften beeinflußt und gibt daher ein Referenzsignal ab. Bei dieser Anordnung muß der Referenzsensor recht genau zentriert werden und es ist auch ein verhältnismäßig großer Abstand zwischen den beiden Sensoren vorhanden, weil es, wie erwähnt, vorteilhaft ist, den Meßsensor möglichst nahe dem Umfang des Rotors anzuordnen.

Will man dies vermeiden, so sieht eine weitere bevorzugte Ausführungsform der Erfindung vor, daß der Referenzsensor einem Bereich des Rotors gegenüberliegt, der andere Dämpfungseigenschaften hat als diejenigen Bereiche des Rotors, die dem Meßsensor gegenüberliegen. Dieser Bereich mit gewissermaßen neutralen Dämpfungseigenschaften kann dann eine gewisse scheibenförmige Fläche einnehmen, so daß der Referenzsensor sehr nahe dem Meßsensor benachbart angeordnet werden kann. Dies bringt den wesentlichen Vorteil mit sich, daß äußere Störeinflüsse, beispielsweise bedingt durch äußere Magnetfelder, äußere Temperatureinflüsse usf., beide Sensoren praktisch gleich beeinflussen, so daß diese äußeren Störeinflüsse sich gegenseitig eliminieren.

Bei dieser Ausführungsform genügt es grundsätzlich, wenn der Referenzsensor einem Bereich gegenüberliegt, der andere Dämpfungeigenschaften hat als diejenigen Bereiche des Rotors, die dem Meßsensor gegenüberliegen. Die Genauigkeit der Signalverarbeitung wird aber erhöht und damit auch die Meßgenauigkeit, wenn, wie es bevorzugt wird, derjenige Bereich des Rotors, dem der Referenzsensor gegenüberliegt, eine Dämpfung hat, die dem Mittel der Dämpfungen der Bereiche entspricht, die dem Meßsensor gegenüberliegen.

Eine konstruktiv besonders einfache Ausführungsform des scheibenförmigen Rotors ist dadurch gekennzeichnet, daß eine Kunststoffscheibe mit Metallen beschichtet ist, die die weiteren Bereiche mit den unterschiedlichen Dämpfungseigenschaften ergeben.

Diese Metallbeschichtungen unterscheiden sich beispielsweise durch unterschiedliche Dicke, beispielsweise von aufgedampften Kupferschichten, oder auch durch unterschiedliche Formen, beispielsweise durch eine unterschiedliche Anzahl und/oder Größe von Kreisen.

Falls der Rotor als Hohlzylinder ausgebildet ist, zeichnet er sich durch eine besonders geringe Trägheit aus, was naturgemäß vorteilhaft ist, insbesondere wenn ein mit geringer Geschwindigkeit strömendes Medium gemessen werden soll.

Es wurde schon erwähnt, daß die Sensoren als Spulen ausgebildet sind. Es können Luftspulen, aber auch Spulen mit Ferritkernen verwendet werden.

Luftspulen werden aus folgenden Gründen verwendet: Im Gegensatz zu Ferritkernen oder gar Ferromagnetkernen tritt keine Kernmaterialsättigung auf, die durch äußere DC-Magnetfelder (= Störung) verursacht werden kann. Ein in Sättigung befindlicher Kern kann keine weitere Energie mehr aufnehmen, insbesondere die Energie des Sensorschwingkreises. (Die Sensorspule mit Kondensator als Schwingkreis betrachtet kann dann keine Schwingungen mehr ausführen, da der Energiespeicher (= Spule) keine Energieänderung zuläßt.)

Geeignete Ferritkerne mit hoher Sättigungfeldstärke werden benutzt, um gezielt den magnetischen Felderlauf zu führen und zur Erhöhung der Güte der Sensorspule.

Ummagnetisierungsverluste kann man durch geeignete Wahl des Ferritkernmaterials für den entsprechenden Frequenzbereich sehr klein halten. Es wird dann wenig Energie verbraucht.

Ferritspulen können mit Kernen in Pilzform (z. B. besonders für einen Rotor in Becherform) oder Halbschalenform (optimal für flache Rotorscheibe) eingesetzt werden. Pilzform wie Halbschalenform sind Stand der Technik bei magnetischen Näherungssensoren.

Vorteile von Luftspulen: Statische Magnetfelder führen zu keiner Sättigungserscheinung magnetischer Energie in der Spule. Der Sensorschwingkreis kann ungehindert schwingen.

Vorteile von Spulen mit Ferritkernen: Gute Feldführung, - Verstärkung und Bündelung zum dämpfenden Rotorbereich hin, Erhöhung der Güte der Spule und damit des Schwingkreises.

Die Erfindung wird im folgenden anhand von Ausführungsbeispielen näher erläutert, aus denen sich weitere wichtige Merkmale ergeben. Es zeigt:

Fig. 1a - schematisch eine Ansicht der wesentlichen Bauelemente eines erfindungsgemäßen Detektors, wobei der Rotor drei Bereiche unterschiedlicher Dämpfung hat;

Fig. 1b - eine Ansicht entsprechend Fig. la, wobei der Detektor vier Bereiche unterschiedlicher Dämpfung hat;

Fig. 1c - eine Stirnansicht und eine Seitenansicht einer abermals abgeänderten Ausführungsform, wobei der Rotor als Hohlzylinder ausgebildet ist und Spulen mit Ferritkernen verwendet werden;

Fig. 1d - ein Diagramm zur Darstellung des Dämpfungsverlaufs, wobei über der Zeit bzw. über einen vollen Drehwinkel das bei der Anordnung nach Fig. la erhaltene Signal aufgezeichnet ist;

Fig. 1e - eine Darstellung einer weiteren Ausführungsform;

Fig. 2 - ein Schaltschema für die Schwingkreise der beiden Sensoren;

Fig. 3a - ein Blockschaltbild;

Fig. 3b - ein Zustandsdiagramm;

Fig. 4 - ein Blockschaltbild für die Auswerteelektronik.

Ein möglicher Aufbau der Sensorik ist in Fig. la schematisch dargestellt. Der Umdrehungsdektor besteht aus einer flachen Rotorscheibe R mit einer ungeraden Anzahl von drei oder mehr Rotorsegmenten unterschiedlicher elektromagnetischer Eigenschaften d0, d1, d2, einem Meßsensor MS, der an der Peripherie des Rotors und einem Referenzsensor RS, der über dem Zentrum des Rotors angebracht ist. Die Reichweite des Meßsensors beschränkt sich im wesentlichen auf ein Rotorsegment. Die Reichweite des Referenzsensors umfaßt alle Rotorsegmente zu gleichen Anteilen.

Typischerweise werden als Sensoren Spulen eingesetzt, in deren magnetischen Kreis sich auch der Rotor befindet. Die verschiedenen Rotorsegmente besitzen die Fähigkeit, durch magnetische Feldankopplung der Sensorspule Energie zu entziehen. Es können z.B. die Rotorsegmente mit einer CuFolie unterschiedlicher Dicke kaschiert werden. Ein Aufbringen mit unterschiedlich vielen und/oder mit unterschiedlichen Durchmessern versehenen Kurzschlußringen je Rotorsegment bildet eine zweite Möglichkeit. Um Kosten zu sparen, setzt man die Anzahl der Segmente k=3. Dieses Beispiel wird im weiteren verfolgt, ohne die Allgemeinheit einzuschränken.

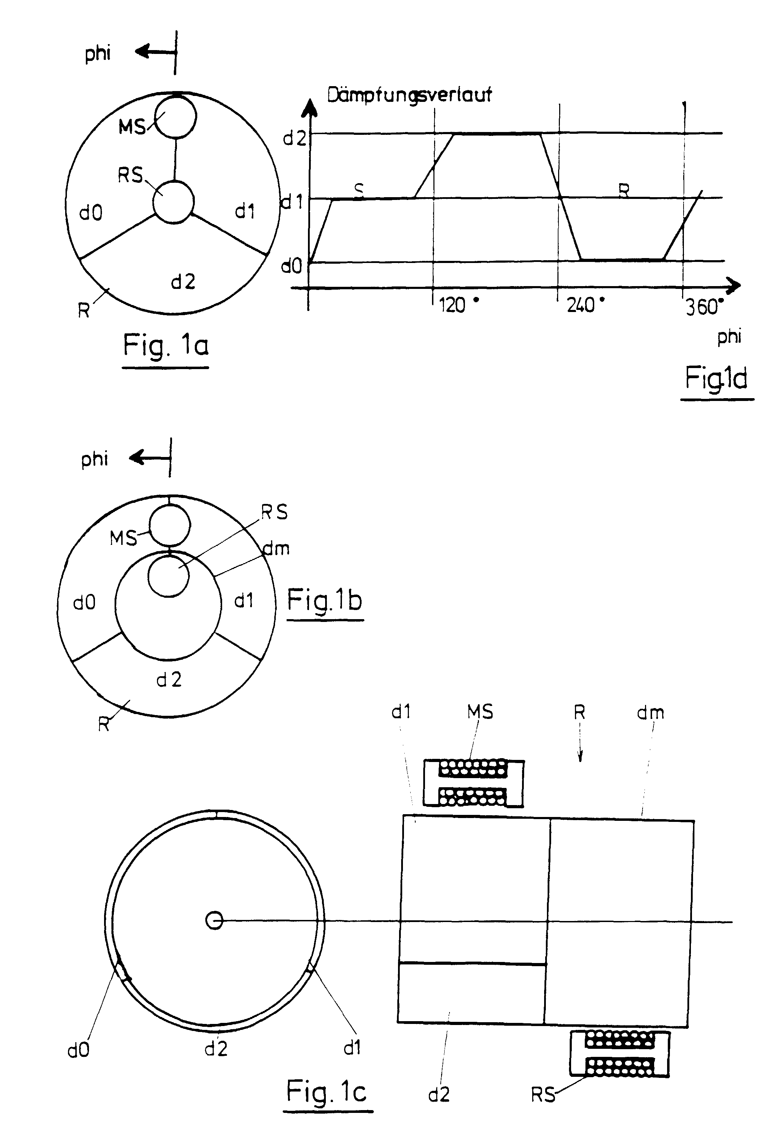

Eine weitere Anordnung der Sensorik ist in Fig. 1b dargestellt. Man kann einen (k+1)ten Rotorbereich bereitstellen, der durch die mittlere Dämpfung der übrigen k Rotorbereiche gekennzeichnet ist. Dies ist der mittlere Rotorbereich dm.

Auch eine walzenförmige Ausführung des Rotors ist möglich, wie Fig. 1c zeigt.

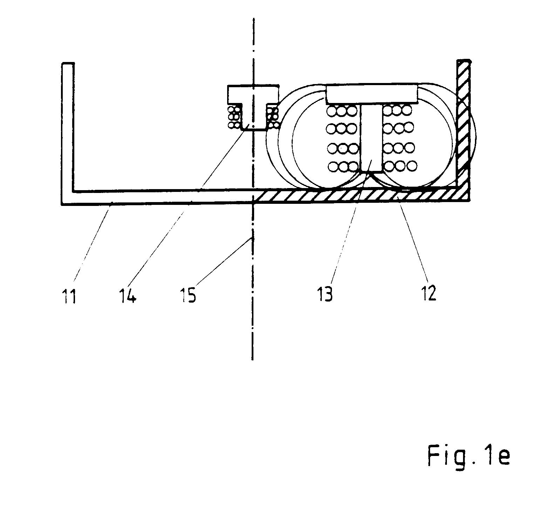

Fig. 1e zeigt einen Rotor in Becherform mit einem Bereich 12 aus dämpfendem Material.

Ein Meßsensor 13 in Pilzform ist im Rotor angeordnet. Angedeutet sind ebenfalls die Feldlinien.

Ein Referenzsensor 14 ist ebenfalls im Rotor dem Meßsensor benachbart dargestellt, und zwar auf der Drehachse 15 des Rotors 11.

Die Sensoren sind jeweils Teil eines Schwingkreises, der kurz angeregt wird und dann eine freie gedämpfte Schwingung ausführt. Das Abklingen der elektrischen Schwingung ist von der Dämpfung der verschiedenen Rotorsegmente abhängig. Fig.1d zeigt in Abhängigkeit von der Winkelstellung des Rotors die Dämpfung d oder die dämpfungsproportionale Güte Q der Sensorschwingkreise.

Der Meßsensor erzeugt einen in Abhängigkeit der Rotorstellung $\varphi$ periodischen Verlauf der Dämpfung mit der Periode $2\pi$. Nach einer Übergangsphase von einem Rotorsegment zum nächsten ist die Dämpfung konstant, während das Rotorsegment am Meßsensor vorrüber streicht.

Der Verlauf des Referenzsensorsignals ist weitgehend unabhängig von der Rotorstellung. Er ändert sich nur mit Variation der elektromagnetischen Eigenschaften der gesamten Sensorik und kann deshalb als Fehlerausgleichssignal für den Meßsensor genutzt werden. So ist es möglich, Temperaturschwankungen (z.B. systembedingt bei Volumenmeßteilen) und äußere Magnetfelder zu kompensieren. Es wird auch eine Störunterdrückung für quasistatische Magnetfelder erreicht, wenn die Zeitvarianz des Magnetfeldes das im folgenden Abschnitt besprochene Abtasttheorem einhält.

Die beiden Sensorschwingkreise werden kurz nacheinander während der Zeit tp im Abstand t1 erregt und die Schwingungen über ein Meßfenster von tmeß ausgewertet. Die Sensorik kann deshalb als ein Abtastsystem betrachtet werden.

Die Quantisierung des Sensorsignals durch die beiden Zähler führt zur digitalen Darstellung des Sensorsignals (d.h. der Güte oder Dämpfung). Die Sensorik kann daher als Analog-Digital-Umsetzer nach dem Zählverfahren behandelt werden.

Der Meßsensor wird mit der Abtastrate fa = 1/Ta betrieben. Da auch der Referenzsensor mit dieser Abtastrate betrieben wird, um die Meßsensorsignalauswertung stetig an das Referenzsensorsignal anzupassen, kann man die maximal mögliche Anzahl n der Umdrehungen bei k Rotorsegmenten unter Einhaltung des Shannonschen Abtasttheorems und Berücksichtigung eines Überabtastfaktors ü angeben:

$$n = 1/(2\ Ta\ k\ ü), \text{ mit } Ta > tmeß + t1 + tp.$$

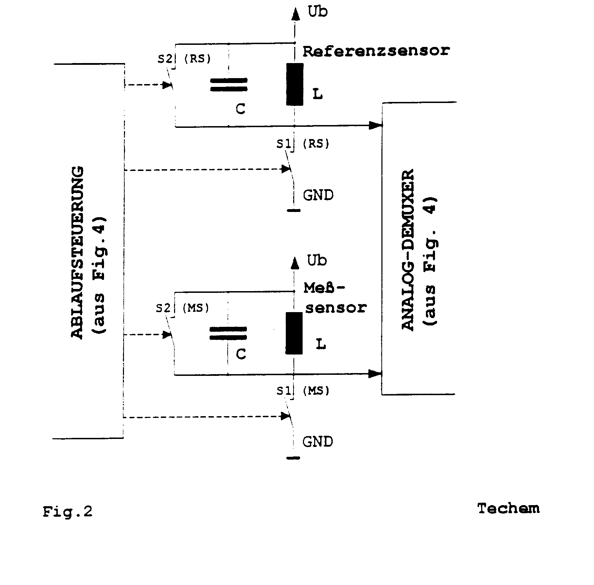

Fig. 2 zeigt das elektrische Ersatzschaltbild einer möglichen Sensorik. Zur Erregung eines Schwingkreises wird Schalter S1 für die Zeitdauer tp geschlossen. Der Schalter S2 des gleichen Sensors ist offen, derjenige des nicht erregten Sensors ist geschlossen, um eine elektromagnetische Verkopplung der beiden Sensoren zu unterbinden.

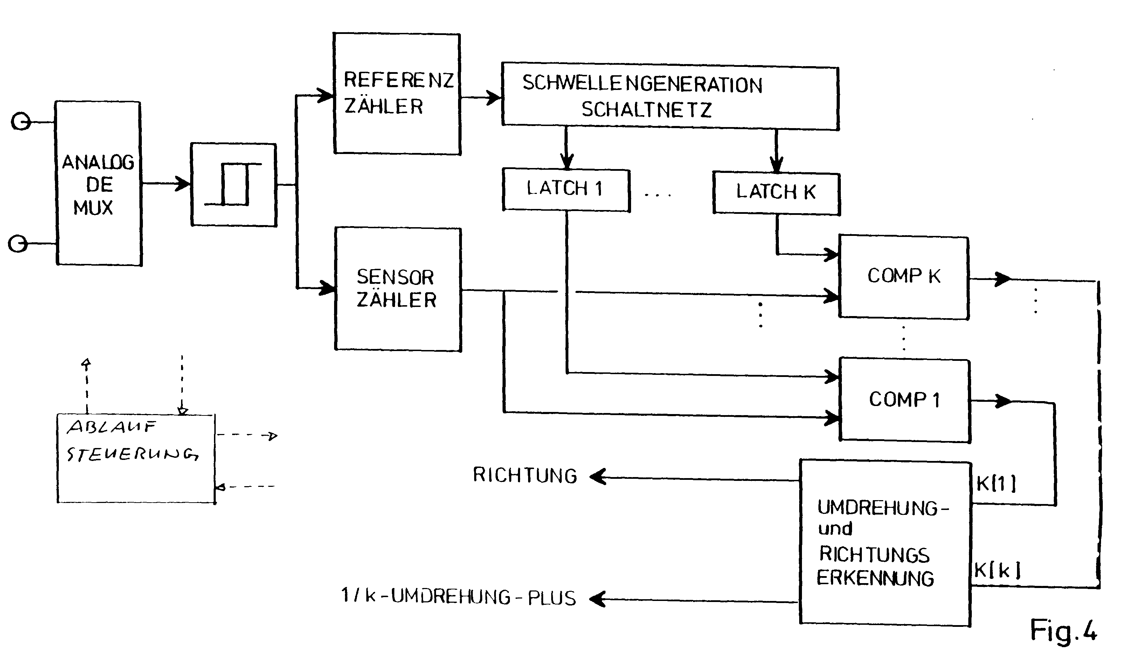

Fig. 4 zeigt die Blockschaltung des Senssorsignalverarbeitungsprozesses. Die Kontrolle über den Sensorsignalverarbeitungsprozeß übernimmt eine Ablaufsteuerung. Die Sensorsignale werden einem Analog-Demultiplexer zugeführt, der eine hardwarerealisierte Schwelle (mit Hysterese) mit dem jeweils durchgeschalteten Sensorsignal beaufschlagt: Es wird eine Hard-Decision durchgeführt. Das so gewonnene Schwellenausgangssignal stellt die zeitliche Folge der Schwellenüberschreitungen einer Sensorschwingkreisschwingung dar und ist deshalb proportional der momentanen Sensorschwingkreisgüte Q oder Dämpfung d. Die Anzahl N der Schwellenüberschreitungen werden je nachdem, ob der Referenz- oder der Meßsensor aktiv ist, mit dem Referenz- oder Sensorzähler für jede einzelne Sensorschwingung gezählt. Ein Schwellengeneration-Schaltnetz generiert k-1 Schwellen, mit denen der nächste Sensorzählerstand verglichen wird (Soft-Decision), da diese Schwellwerte in k-1 Latches zwischengespeichert werden. Die Ausgangssignale der k-1 Komparatoren K[1] bis K[k-1] werden in einer Umdrehungs- und Richtungserkennung verarbeitet. Diese liefert zwei zeitvariante digitale Ausgangssignale, die als Richtung und 1/k-Umdrehungs-Puls interpretiert werden können.

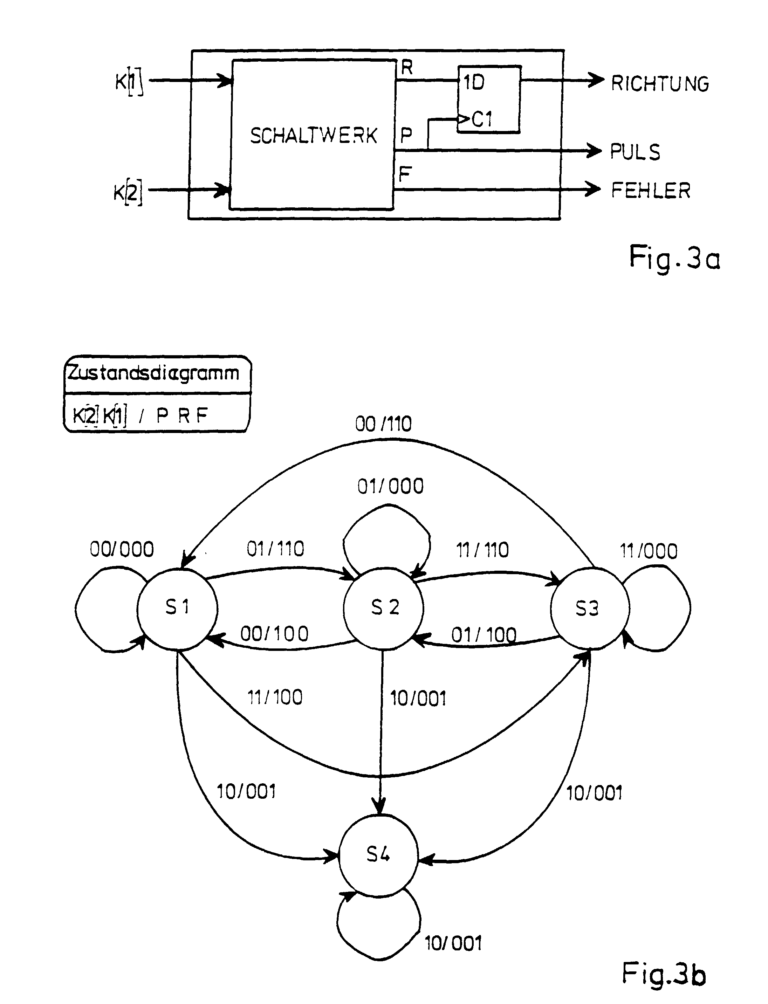

Fig. 3a zeigt ein detailliertes Blockschaltbild der Umdrehungs- und Richtungserkennung für k=3 verschiedene Rotorsegmente. Sie besteht aus einem Schaltwerk (finit state machine, FSM) und einem D-Flipflop.

Das Zustandsdiagramm des Schaltwerks ist in Fig. 3b dargestellt. Das Schaltwerk ist als endlicher Mealy-Automat modelliert. Die einzelnen Zustände ergeben sich aus dem in Fig. la und ld dargestellten Verlauf der Dämpfung bei k=3 Rotorsegmenten. Der Zustand S4 ist redundant und wird als Fehlerzustand benutzt. Das generierte Fehlersignal kann gespeichert und überwacht werden. Die Übergangsfunktion aus dem Fehlerzustand S4 ist nicht angegeben, da diese auf mehrere Art und Weise ausgelöst werden kann (z.B. asynchrones Rücksetzsignal, synchron durch eine Übergangsfunktion in einen erlaubten Zustand). Das Schaltwerk kann als synchrones Schaltwerk mit minimal 2 Speicherkomponenten (Flipflops) aufgebaut werden; ein weiteres D-Flipflop ist zur Richtungserkennung notwendig.

Die 1/k-Umdrehungspulse und das Richtungsanzeigesignal können in einem Volumenmeßteil weiter verarbeitet werden.

Es ist somit ersichtlich, daß der Kern der Erfindung, verglichen mit dem eingangs erwähnten Stand der Technik die Reduktion der Sensoren auf zwei ist sowie eine Erhöhung der Dämpfungssegmente mit unterschiedlichen elektromagnetischen Eigenschaften, um so kostenminimal die umdrehungsinclusive Richtungsdetektion durchzuführen.

Die konstruktive Kostenfunktion nimmt ein absolutes Minimum bei einer Anzahl von 2 Sensoren und 3 unterschiedlichen Rotorsegmenten an.

Dies ermöglicht (bei gleichgebliebener Technologie) eine höhere Abtastrate der Rotorscheibe und somit die Detektion höherer Drehzahlen. Bei gegebener maximaler Drehzahl kann gegenüber Sensorsystemen mit 3,4 oder mehr Sensoren Energie eingespart werden, da pro Zeiteinheit weniger Sensorabtastungen vorgenommen werden müssen. Der Umdrehungsdetektor ist deshalb besonders gut für batteriebetriebene Sensorsysteme geeignet.

Die Winkelauflösung kann in gewissen Grenzen, die von der Sensorgeometrie des Meßsensors abhängen, durch die Anzahl k der diversen Winkelsegmente variiert werden.

Die Konstruktion der dargestellten Sensorik ist erst durch rechnergestütze Analyse-Verfahren effektiv durchführbar. Eine Optimierung der Sensorsystemparameter ist analytisch nicht oder nur sehr schwer durchführbar. Algebraische Modelle der Sensorik können aber beliebig genaue numerische Lösungen der Sensorsystemoptimierung oder bei gegebenem Sensorsystem optimale Systemparameter liefern.

**Patentansprüche**

1. Umdrehungsdetektor, insbesondere für ein Volumenmeßteil mit einem Rotor (R), der winkelig verteilt mehrere Bereiche (d0,d1,d2) mit unterschiedlichen Dämpfungseigenschaften für elektromagnetische Schwingungen aufweist, denen gegenüberliegend mehrere Sensoren (MS,RS) angeordnet sind, die jeweils Elemente eines Schwingkreises sind, derart, daß bei einer Drehung des Rotors (R) die Schwingungen der Schwingkreise gedämpft werden, wobei die Ausgangssignale der Schwingkreise einer Diskriminatorschaltung zugeleitet werden, die die Umdrehungen des Rotors (R) sowie ggf. auch dessen Drehrichtung mißt,
**dadurch gekennzeichnet**,
daß genau zwei Sensoren (MS, RS) vorgesehen sind, von denen ein Sensor, der Referenzsensor (RS), einem Bereich des Rotors (R) gegenüberliegt, dessen Dämpfungseigenschaften sich bei der Drehung des Rotors (R) nicht ändern, und daß der Rotor (R) in demjenigen Bereich, der dem anderen Sensor, dem Meßsensor (MS) bei der Drehung gegenüberliegt, eine ungerade Anzahl der Bereiche (d0, d1, d2) mit unterschiedlichen Dämpfungseigenschaften hat.

2. Umdrehungsdetektor nach Anspruch 1,
**dadurch gekennzeichnet**,
daß der Rotor (R) als Scheibe ausgebildet ist.

3. Umdrehungsdetektor nach Anspruch 1 oder 2,
**dadurch gekennzeichnet**,
daß der Meßsensor (MS) möglichst nahe dem Umfang des Rotors angeordnet ist.

4. Umdrehungsdetektor nach einem der Ansprüche 1 bis 3,
**dadurch gekennzeichnet**,
daß der Referenzsensor (RS) der Drehachse des Rotors (R) gegenüberliegend angeordnet ist.

5. Umdrehungsdetektor nach einem der Ansprüche 1 bis 4,
**dadurch gekennzeichnet**,
daß der Referenzsensor (RS) einem Bereich (dm) des Rotors (R) gegenüberliegt, der andere Dämpfungseigenschaften hat als diejenigen Bereiche (d0, d1, d2) des Rotors, die dem Meßsensor (MS) gegenüberliegen.

6. Umdrehungsdetektor nach Anspruch 5,
**dadurch gekennzeichnet**,
daß derjenige Bereich (dm) des Rotors (R), dem der Referenzsensor (RS) gegenüberliegt, eine Dämpfungseigenschaft hat, die dem Mittel der Dämpfungseigenschaften der Bereiche entspricht, die dem Meßsensor (MS) gegenüberliegen.

7. Umdrehungsdetektor nach einem der Ansprüche 1 bis 6,
**dadurch gekennzeichnet**,
daß der Referenzsensor (RS) und der Meßsensor (MS) möglichst nahe einander benachbart angeordnet sind.

8. Umdrehungsdetektor nach einem der Ansprüche 1 bis 7,
**dadurch gekennzeichnet**,
daß der Rotor (R) als Kunststoffscheibe mit Metallbeschichtungen ausgebildet ist, die die Bereiche (d1, d2) mit den unterschiedlichen Dämpfungseigenschaften bilden.

9. Umdrehungsdektor nach Anspruch 8,
**dadurch gekennzeichnet**,
daß die Metallbeschichtungen in den Bereichen mit den unterschiedlichen Dämpfungseigenschaften unterschiedlich dick sind.

10. Umdrehungsdetektor nach Anspruch 8 oder 9,
**dadurch gekennzeichnet**,
daß die Metallbeschichtungen in den Bereichen mit den unterschiedlichen Dämpfungseigenschaften unterschiedliche Formen haben, unterschiedliche elektrische Leitfähigkeiten aufweisen und/oder unterschiedliche magnetische Leitfähigkeiten aufweisen.

11. Umdrehungsdetektor nach Anspruch 1 oder einem der Ansprüche 3 bis 7, soweit dieser auf Anspruch 1 rückbezogen ist,
**dadurch gekennzeichnet**,
daß der Rotor (R) als Hohlzylinder oder als Becher ausgebildet ist.

12. Umdrehungsdetektor nach Anspruch 11,
**dadurch gekennzeichnet**,
daß die Sensoren (RS, MS) axial beabstandet voneinander angeordnet sind.

13. Umdrehungsdetektor nach einem der Ansprüche 1 bis 12,
**dadurch gekennzeichnet**,
daß die Sensoren (RS, MS) als Luftspulen oder als Spulen mit Ferritkernen ausgebildet sind.

## Claims

1. Revolution detector, in particular for a volume measuring part, having a rotor (R) which is angularly divided into a plurality of regions (d0, d1, d2) with different damping properties for electromagnetic oscillations, opposite to which regions are arranged a plurality of sensors (MS, RS) which are respectively elements of a resonant circuit in such a way that the oscillations of the resonant circuits are damped during a revolution of the rotor (R), the output signals of the resonant circuits being supplied to a discriminator circuit which measures the revolutions of the rotor (R) and also, if required, its direction of rotation, characterised in that precisely two sensors (MS, RS) are provided of which one sensor, the reference sensor (RS), is opposite to a region of the rotor (R) whose damping properties do not change during the revolution of the rotor (R) and in that the rotor (R) has an uneven number of regions (d0, d1, d2) with different damping properties in that region which is opposite to the other sensor, the measurement sensor (MS), during the revolution.

2. Revolution detector according to Claim 1, characterised in that the rotor (R) is configured as a disc.

3. Revolution detector according to Claim 1 or 2, characterised in that the measurement sensor (MS) is arranged as close as possible to the periphery of the rotor.

4. Revolution detector according to one of Claims 1 to 3, characterised in that the reference sensor (RS) is arranged opposite to the axis of rotation of the rotor (R).

5. Revolution detector according to one of Claims 1 to 4, characterised in that the reference sensor (RS) is opposite to a region (dm) of the rotor (R) which has different damping properties from those regions (d0, d1, d2) of the rotor which are opposite to the measurement sensor (MS).

6. Revolution detector according to Claim 5, characterised in that that region (dm) of the rotor (R) which is opposite to the reference sensor (RS) has a damping property which corresponds to the average of the damping properties of the regions which are opposite to the measurement sensor (MS).

7. Revolution detector according to one of Claims 1 to 6, characterised in that the reference sensor (RS) and the measurement sensor (MS) are arranged as closely adjacent to one another as possible.

8. Revolution detector according to one of Claims 1 to 7, characterised in that the rotor (R) is configured as a plastic disc with metal coatings which form the regions (d1, d2) with different damping properties.

9. Revolution detector according to Claim 8, characterised in that the metal coatings are of different thicknesses in the regions with the different damping properties.

10. Revolution detector according to Claim 8 or 9, characterised in that the metal coatings have different shapes in the regions with the different damping properties, exhibit different electrical conductivities and/or exhibit different magnetic conductivities.

11. Revolution detector according to Claim 1 or one of Claims 3 to 7, characterised in that the rotor (R) is configured as a hollow cylinder or as a cup to the extent that the latter is referred back to Claim 1.

12. Revolution detector according to Claim 11, characterised in that the sensors (RS, MS) are arranged at an axial distance from one another.

13. Revolution detector according to one of Claims 1 to 12, characterised in that the sensors (RS, MS) are configured as air-cored coils or as coils with ferrite cores.

## Revendications

1. Détecteur de rotation, notamment pour un élément de mesure de volume, comprenant un rotor (R), qui présente, réparties de manière angulaire, plusieurs zones (d0, d1, d2) à propriétés d'amortissement différentes pour des oscillations électromagnétiques, zones en regard desquelles sont disposés plusieurs capteurs (MS, RS) qui constituent chacun des éléments d'un circuit oscillant, de façon telle que lors d'une rotation du rotor (R), les oscillations des circuits oscillants soient amorties, les signaux de sortie des circuits oscillants étant transmis à un circuit discriminateur, qui mesure le nombre de tours du rotor (R) ainsi que, le cas échéant, son sens de rotation, caractérisé en ce qu'il est juste prévu deux capteurs (MS, RS) dont un, le capteur de référence (RS), se situe en regard d'une zone du rotor (R), dont les propriétés d'amortissement ne varient pas lors de la rotation du rotor (R), et en ce que le rotor (R) possède, dans la zone qui lors de la rotation se situe en regard de l'autre capteur, à savoir le capteur de mesure (MS), un nombre impair des zones (d0, d1, d2) à propriétés d'amortissement différentes.

2. Détecteur de rotation selon la revendication 1, caractérisé en ce que le rotor (R) est réalisé sous forme de disque.

3. Détecteur de rotation selon la revendication 1 ou 2, caractérisé en ce que le capteur de mesure (MS) est disposé le plus près possible de la circonférence du rotor.

4. Détecteur de rotation selon l'une des revendications 1 à 3, caractérisé en ce que le capteur de référence (RS) est disposé en regard de l'axe de rotation du rotor (R).

5. Détecteur de rotation selon l'une des revendications 1 à 4, caractérisé en ce que le capteur de référence (RS) est situé en regard d'une zone (dm) du rotor (R), qui présente d'autres propriétés d'amortissement que celles des zones (d0, d1, d2) du rotor, situées en regard du capteur de mesure (MS).

6. Détecteur de rotation selon la revendication 5, caractérisé en ce que ladite zone (dm) du rotor (R), en regard de laquelle se situe le capteur de référence (RS), présente une propriété d'amortissement qui correspond à la moyenne des propriétés d'amortissement des zones situées en regard du capteur de mesure (MS).

7. Détecteur de rotation selon l'une des revendications 1 à 6, caractérisé en ce que le capteur de référence (RS) et le capteur de mesure (MS) sont disposés dans des positions voisines, le plus près possible l'un de l'autre.

8. Détecteur de rotation selon l'une des revendications 1 à 7, caractérisé en ce que le rotor (R) est réalisé sous forme d'un disque en matière plastique à revêtements de métal, qui forment les zones (d1, d2) présentant les propriétés d'amortissement différentes.

9. Détecteur de rotation selon la revendication 8, caractérisé en ce que les revêtements de métal sont d'épaisseurs différentes dans les zones présentant les propriétés d'amortissement différentes.

10. Détecteur de rotation selon la revendication 8 ou 9, caractérisé en ce que les revêtements de métal, dans les zones présentant les propriétés d'amortissement différentes, ont des formes différentes, présentent des conductibilités électriques différentes et/ou présentent des conductibilités magnétiques différentes.

11. Détecteur de rotation selon la revendication 1 ou l'une des revendications 3 à 7, dans la mesure où celles-ci se rattachent à la revendication 1, caractérisé en ce que le rotor (R) est réalisé sous forme d'un cylindre creux ou sous forme d'un godet.

12. Détecteur de rotation selon la revendication 11, caractérisé en ce que les capteurs (RS, MS) sont disposés de manière à être espacés axialement l'un de l'autre.

13. Détecteur de rotation selon l'une des revendications 1 à 12, caractérisé en ce que les capteurs (RS, MS) sont réalisés sous forme de bobines sans fer ou sous forme de bobines à noyaux de ferrite.

phi

MS

RS

d0   d1

d2

R

## Fig. 1a

Dämpfungsverlauf

d2

d1   S   R

d0

120°   240°   360°

phi

## Fig1d

phi

RS

MS   dm

d0   d1   ## Fig.1b

d2

R

d1   MS   R   dm

## Fig. 1c

d0   d2   d1

d2   RS

Fig.1e

Fig.2                                                                                    Techem

Fig.3a

Zustandsdiagramm

K2 K1 / P R F

Fig.3b

Fig.4